# EUROPEAN PATENT APPLICATION

(11) **EP 1 758 020 A1**
(43) Date of publication of application: **28.02.2007**
(21) Application number: 04746113.2
(22) Date of filing: 18.06.2004
(51) Int. Cl.: G06F 7/58

(54) **RANDOM NUMBER GENERATION DEVICE, GENERATION METHOD, GENERATOR EVALUATION METHOD, AND RANDOM NUMBER USE METHOD**

(71) Applicant: FUJITSU LIMITED, Kawasaki-shi, Kanagawa 211-8588 (JP)
(72) Inventor: INAOKA, Tomoaki, Kawasaki-shi Kanagawa 211-8588 (JP); FUEKI, Shunsuke, Kawasaki-shi Kanagawa 211-8588 (JP)
(74) Representative: Seeger, Wolfgang
(86) International application number: PCT/JP2004/008611
(87) International publication number: WO 2005/124537

(57) **Abstract**

It is possible to generate a random number with a secure randomness even in an environment in which the random number is easily affected by external influence; for example, when it is mounted on a noncontact IC card. A random number generation device comprises a random number generation unit for generating random numbers, a random number generation control unit for providing random number generation parameters to the random number generation unit, and a randomness determination unit for determining the randomness of each generated random number. If the randomness of each generated random number does not meet a predetermined condition, the random number generation control unit updates the random number generation parameters and enables the random number generation unit to generate a new random number.

## Description

### Technical Field

The present invention relates to a random number generation method and more particularly relates to a random number generation device, and a method thereof, that could be, for example, mounted on a noncontact IC card to which power is supplied in a noncontact manner, and is easily subjected to external influence.

### Background Art

Random numbers are often used in the data processing devices of IC cards, which are the target of the present invention. IC cards are often used to authenticate persons represented by a resident register, credit cards and the like. For the authentication function, a public key encryption is usually used and a random number is used to generate the key. Conventionally, a pseudo-random number generated, for example, by software is used. However, it has been pointed out that biased random numbers which are generated by software, depending on the method used to acquire the seed (which is the base of a random number), often occur and there is a possibility that subsequent numbers may be anticipated when they are generated from the above generated pseudo-random number. In order to solve such problems, a method in which a value is difficult to anticipate has been studied by devising a seed acquisition method; in addition, the mounting of a random number generator utilizing a physical phenomenon, such as thermal noise or the like, has also been studied.

In order to evaluate the randomness of a random number generated by the conventional random number generator, the state of a single random number generator is evaluated. Specifically, the randomness of a random number generated by providing power and a signal only to a random number macro is evaluated. However, the operation of the random number generator is sometimes affected by its operational conditions (such as power voltage or the like and sampling intervals and the like), which generate biased random numbers. More particularly, in a noncontact card, since power supplied from an antenna via an electromagnetic wave is used, the random number generator operates in a relatively unstable power condition. There is also a possibility that the operation of the random number generator will be affected by the location relationship between the IC card and its reader/writer.

As a result, even when a single random number generator in which the occurrence of its randomness has been confirmed is used, the randomness is not always assured when power is supplied from an antenna via an electromagnetic wave and the random number generator is mounted on an unstably powered noncontact IC card. This situation is problematic.

As to the use of random numbers in such IC cards, there is the following prior art.
Patent reference 1: Japanese Patent Application Publication No. H03-294987 "IC Card System"
Patent reference 2: Japanese Patent Application Publication No. 2002-268874 "Random Number Seed Generation Circuit and Driver and SD Memory Card System thereof"
Patent reference 3: Japanese Patent Application Publication No. 2002-32732 "Pseudo-Random Number Acquisition Method in Portable Information Processing Device"
Patent reference 1 discloses a system for providing new services utilizing a security function and a memory function by using an IC card in which a plurality of random numbers are stored in a large capacity of nonvolatile memory.
Patent reference 2 discloses a random number seed generation circuit capable of generating a different random number seed every time power is switched on, since each point in time of outputting the taking-in signal of a power-on resetting circuit, which is for outputting the taking-in signal of a latch for latching the counter value (random number seed) of a counter, is different.
Patent reference 3 discloses a random number acquisition method capable of widely reducing the waiting time for obtaining a random number by storing many random numbers generated in advance in nonvolatile memory or the like and for referring to the memory when a random number is needed. However, even in prior art such as these, when a random number generator is mounted on a noncontact IC card or the like, there is still an unsolvable problem: it cannot be guaranteed that the randomness of a generated random number will always be sufficiently secured regardless of external influence.

It is the first object of the present invention to provide a random number generation device, and a method thereof, for generating a random number whose randomness is secured even in an easily affected environment, such as when the random number generator is mounted on a noncontact IC card or the like.

It is the second object of the present invention to provide a method of evaluating a random number generator that generates random numbers with a fairly short bit length and to find an effective method of using a random number generated with such a random number generator, as when the random number generator is mounted on an IC card.

### Disclosure of the Invention

The random number generation device of the present invention comprises a random number generation unit for generating random numbers, a random number generation control unit for giving a parameter for enabling the random generation unit to generate random numbers, and a randomness determination unit for determining the randomness of each generated random number. If the randomness of a generated random number does not meet a predetermined condition, the random number generation control unit updates the above-described parameter to enable the random number generation unit to generate a new random number.

In the random number generation method of the present invention, a parameter for generating a random number is read from memory, a random number is generated using the parameter, and it is determined whether the randomness of the generated random number meets the predetermined condition. If the randomness does not meet the condition, the parameter for generating the random number is updated and a new random number is generated using the updated parameter. Then, the process after the determination of the randomness of the generated random number is repeated.

Thus, a random number with a secured randomness can be generated, thereby realizing data processing using such a random number.

Next, the random number generator evaluation method of the present invention evaluates a random number generator for generating a random number string with a bit number of less than 20,000. In the random number generator evaluation method, the generation of a random number string by a random number generator and the storage in memory of the generated random number string are repeated. When the total bit number of random number string stored in the memory exceeds 20,000, the randomness of a sample with 20,000 bits or more is determined, and the random number generator is evaluated according to the randomness determination result. Thus, a random number generator can be evaluated by, for example, using the static determination method, as specified in FIPS140.

Next, the method for using a random number in the present invention is by length in units of bytes. In the method of using a random number in the present invention, generated random numbers are stored in nonvolatile memory in which data can be read and written in units of bytes. When using a random number in an operation, an unused random number with the necessary byte length is read from the nonvolatile memory and is used. Thus, the use of the same random number is restricted in a hardware-like manner, thereby reducing the possibility that a random number can be anticipated.

### Brief Description of Drawings

Fig. 1 shows the basic configuration of the random number generation device of the present invention;
Fig. 2 shows the basic configuration of the IC card of the present invention;
Fig. 3 shows the configuration of the first preferred embodiment of the IC card;
Fig. 4 shows the configuration of the second preferred embodiment of the IC card;
Fig. 5 shows the configuration of the third preferred embodiment of the IC card;
Fig. 6 shows the configuration of the fourth preferred embodiment of the IC card;
Fig. 7 shows the setting of a random number generator by the random number generation control unit;
Fig. 8 explains the meaning of the correction table parameter;
Fig. 9 shows an example of the stored contents of the correction table parameter storage unit;
Fig. 10 shows the format of the correction table parameter;
Fig. 11 shows the randomness determining operation of the randomness determination unit;
Fig. 12 is a flowchart of the entire random number generation process; and
Fig. 13 shows how to evaluate the random number generator itself.

### Best Mode for Carrying Out the Invention

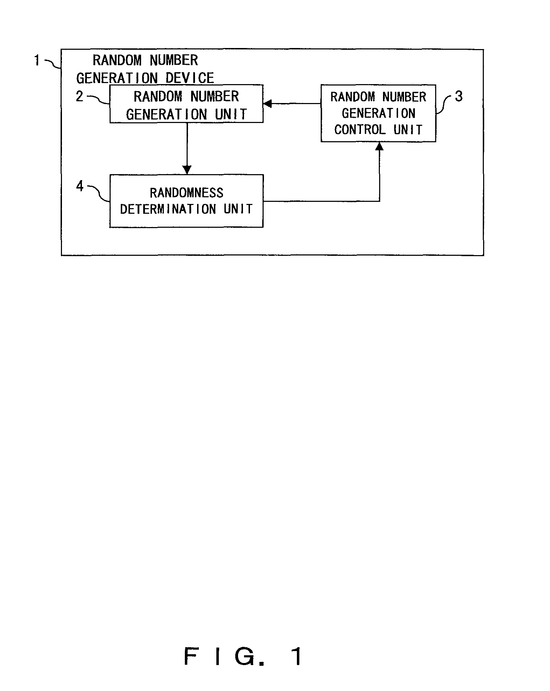

Fig. 1 shows the basic configuration of the random number generation device of the present invention. In Fig. 1, the random number generation device 1 comprises at least a random number generation unit 2, a random number generation control unit 3, and a randomness determination unit 4.

The random number generation unit 2 generates random numbers. The random number generation control unit 3 provides a parameter for generating a random number to the random number generation unit 2. The randomness determination unit 4 determines the randomness of a generated random number. If the randomness determination unit 4 determines that the randomness of a random number generated by the random number generation unit 2 does not meet a predetermined condition, the random number generation control unit 3 updates the parameter to enable the random generation unit 2 to generate a new random number.

In the present invention, the random number generation device 1 can further comprise a parameter storage unit for storing a default parameter as the parameter to be used to generate a random number at the time of activation. In this case, when the random number generation device 1 is activated, the random number generation control unit 3 can also provide the default parameter to the random number generation unit 2.

If the randomness of the random number generated using the default parameter as the parameter does not meet the predetermined condition, the parameter storage unit can also store an update parameter for the random number generation control unit 3 to use for the parameter update. Alternatively, the parameter storage unit can store a plurality of such update parameters in relation to randomness information that indicates whether the generated random number will likely be biased to 0 or 1. The random characteristic determination unit 4 can also provide, to the random number generation control unit 3, determination information indicating whether the generated random number is biased to 0 or 1, and the random number generation control unit 3 can select the update parameter stored in the parameter storage unit according to the given determination information.

Furthermore, if the randomness of the random number re-generated by the random number generation unit 2 meets the condition, the random number generation control unit 3 can also rewrite the default parameter stored in the parameter storage unit into the parameter used to re-generate the random number.

In the present invention, the random number generation device 1 can also be mounted on an IC card in which power is externally supplied in a noncontact manner. Next, in the random number generation method of the present invention, a parameter for generating a random number is read from memory, a random number is generated using the parameter, and it is determined whether the randomness of the generated random number meets the predetermined condition. If the randomness does not meet the condition, an update parameter is read as a parameter for generating the random number and a new random number is generated using the update parameter. Then, the process that occurs after the randomness determination of the generated random number is repeated.

As the program for enabling a computer to generate a random number in the present invention, a program is used for enabling the computer to execute the following processes: reading a parameter for generating a random number from memory, generating a random number using this parameter, determining whether the randomness of the generated random number meets a predetermined condition, reading an update parameter as the parameter for generating a random number when the randomness of the generated random number does not meet a predetermined condition, generating a new random number using the update parameter, and repeating the process after the determination of the randomness of the generated random number.

Next, the random number generator evaluation method of the present invention evaluates a random number generator for generating random number string with a bit numbers less than 20,000. In the random number generator evaluation method, the random number generation by a random number generator and the storage in memory of the generated random number string are repeated. When the total bit number of random number string stored in the memory exceeds 20,000, the randomness of a sample with 20,000 bits or more is determined, and the random number generator is evaluated according to the randomness determination result.

Furthermore, the method for using random numbers of the present invention is by length in units of bytes. In this method of using random numbers, generated random numbers are stored in nonvolatile memory in which data can be read and written in units of bytes. When using a random number in an operation, an unused random number with the necessary byte length is read from the nonvolatile memory and is used.

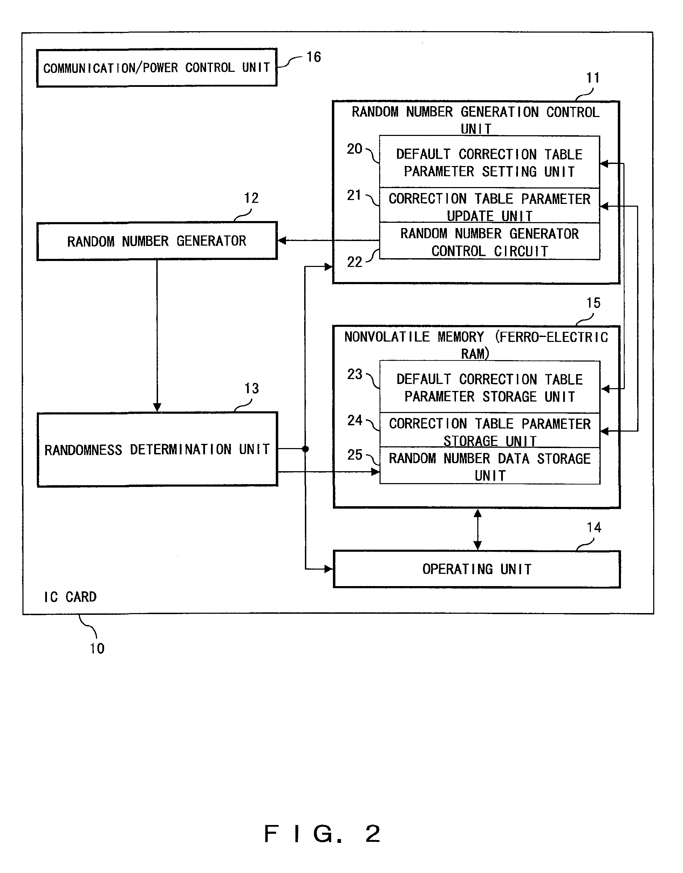

Fig. 2 shows the basic configuration of the IC card of the present invention. In Fig. 2, an IC card 10 comprises a random number generation control unit 11 for controlling random number generation in the IC card 10, a random number generator 12 for generating random numbers, a randomness determination unit 13 for determining the randomness of each generated random number, an operating unit 14 for performing necessary operations using the generated random number, nonvolatile memory 15 for storing parameters and the like to be used to generate random numbers, and a communication/power control unit 16 for communicating with external equipment and having power supplied.

In Fig. 2, the random number generation control unit 11 comprises a default correction table parameter setting unit 20, a correction table parameter update unit 21, and a random number generator control circuit 22. The nonvolatile memory (ferroelectric RAM) 15 comprises a default correction table parameter storage unit 23, a correction table parameter storage unit 24 and a random number data storage unit 25.

In this case, the random number generation unit in claim 1 of the present invention corresponds to the random number generator control circuit 22 and the random number generator 12. The random number generation control unit corresponds to the default correction table parameter setting unit 20 and the correction table parameter update unit 21. The parameter storage unit in claim 2 of the present invention corresponds to the default correction table parameter storage unit 23 and the correction table parameter storage unit 24.

At the time of activation of the IC card 10, the generation of a random number by the random number generator 12 is performed using a default correction table parameter as a parameter for generating a random number. Specifically, the default correction table parameter setting unit 20 sets a default parameter read from the default correction table parameter storage unit 23 in the random number generator control circuit 22, and the random number generator control circuit 22 controls the operation of the random number generator 12. The randomness determination unit 13 determines whether data indicating the randomness of the generated random number, such as the frequency of the appearance of 0 or 1 in the random number, meets a predetermined condition. If the data meets the condition, a termination flag is reported to the random number generation control unit 11 and the operating unit 14, and the generated random number is stored in the random number data storage unit 25 and operates via the operating unit 14 without performing any processes.

If the data does not meet the condition, the fact that the random number cannot be used is reported to the operating unit 14 and the random number generation control unit 11 with an error flag or the like. The correction table parameter update unit 21 of the random generation control unit 11 sets a correction table parameter stored in the correction table parameter storage unit 24 of the nonvolatile memory 15 in the random number generator control circuit 22 instead of the default correction table parameter, and the random number generator 12 re-generates a new random number according to the result. Then, the randomness determination unit 13 determines whether the randomness of the re-generated random number meets the predetermined condition. If the randomness meets the condition, the random number is stored in the random number data storage unit 25, and the operating unit 14 also performs an operation using the random number. Then, the correction table parameter value used to re-generate a new random number is overwritten into the default correction table parameter storage unit 23 of the nonvolatile memory 15 to update the default correction table parameter.

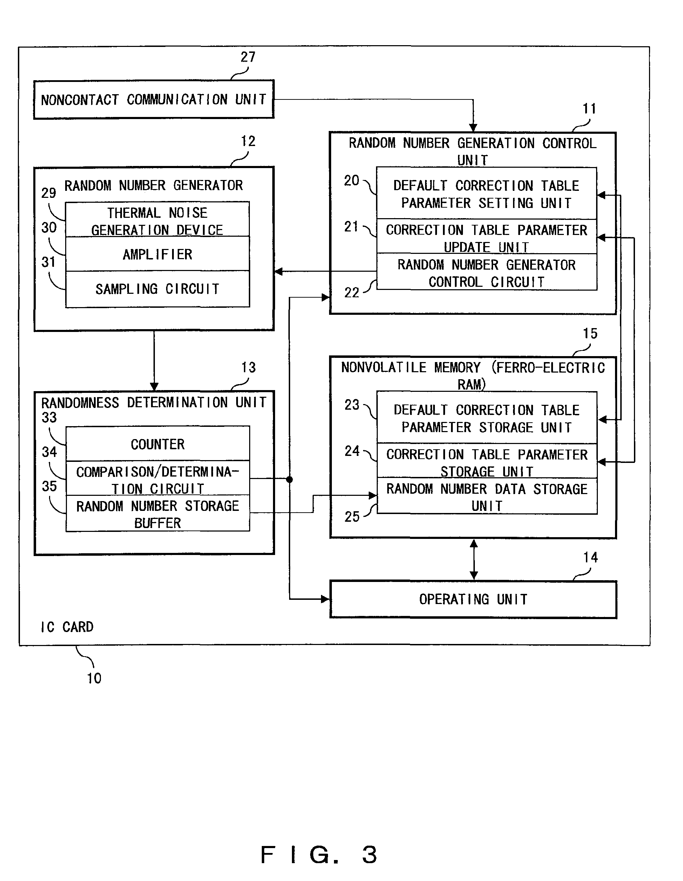

When the re-generated random number does not meet the predetermined condition, the parameter is updated as described above and the operation after the re-generation of a new random number is performed. Thus, when a new random number is generated, the stored contents of the default correction table parameter storage unit 23 is overwritten and updated when a new random number is found whose randomness meets the condition. After the IC card 10 is activated again, the updated default correction table parameter is used to generate a new random number immediately after the reactivation. In this case, by storing the correction table parameter in the nonvolatile memory, the correction table parameter can be easily added/updated externally. Fig. 3 shows the configuration of the first preferred embodiment of the IC card. When the configuration shown in Fig. 3 is compared with the basic configuration shown in Fig. 2, the former differs from the latter in that a noncontact communication unit 27 is provided instead of the communication/power control unit 16 and in that the random number generator 12 comprises a thermal noise generation device 29, an amplifier 30 and a sampling circuit 31 and the randomness determination unit 13 comprises a counter 33, a comparison/determination circuit 34 and a random number storage buffer 35.

The noncontact communication unit 27 communicates with a noncontact IC card reader/writer. Simultaneously, the noncontact communication unit 27 activates the IC card 10 by receiving an electromagnetic wave from the reader/writer and generating DC power for the IC card, and also generates a power-on resetting signal for resetting each unit. Since the power is supplied in a noncontact environment, the power condition is not always stable and there is a great possibility that the randomness of a generated random number will be a problem.

The random number generator control circuit 22 of the random number generation control unit 11 controls the thermal noise generation device 29, the amplifier 30 and the sampling circuit 31 together constitute the random number generator 12, and random numbers are generated via these devices. The operation of these devices is described in greater detail later.

The counter 33 of the randomness determination unit 13 counts the frequency of the appearance of 0 or 1 in a generated random number in order to determine its randomness. The comparison/ determination circuit 34 determines whether the appearance frequency meets a predetermined condition. The random number storage buffer 35 temporarily stores generated random numbers. These operations are also described in more detail later.

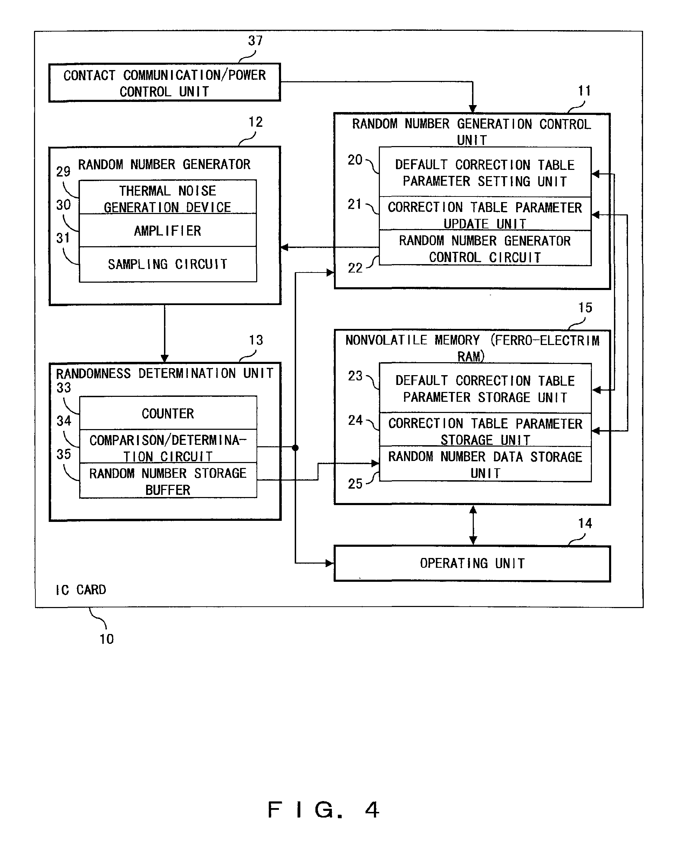

Fig. 4 shows the configuration of the second preferred embodiment of the IC card. Fig. 4 shows that a contact communication/power control unit 37 is provided instead of the noncontact communication unit 27 that is provided in the first preferred embodiment shown in Fig. 3. This contact communication/power control unit 37 communicates with a contact IC card reader/writer. Simultaneously, the power and a clock for the contact communication/power control unit 37 are supplied from the reader/writer side in a contact state; the operation of the IC card is started by externally receiving a resetting signal. Therefore, its power condition is more stable than that of the first preferred embodiment that uses the noncontact communication unit 27 shown in Fig. 3, and there is a possibility that some parameters used to generate a random number, specifically the correction table parameter value, may be different than that of the first preferred embodiment. For example, in the case of a combination card that can conduct both contact and noncontact communication with the IC card reader/writer, such a correction table parameter can be set according to the contact/noncontact condition.

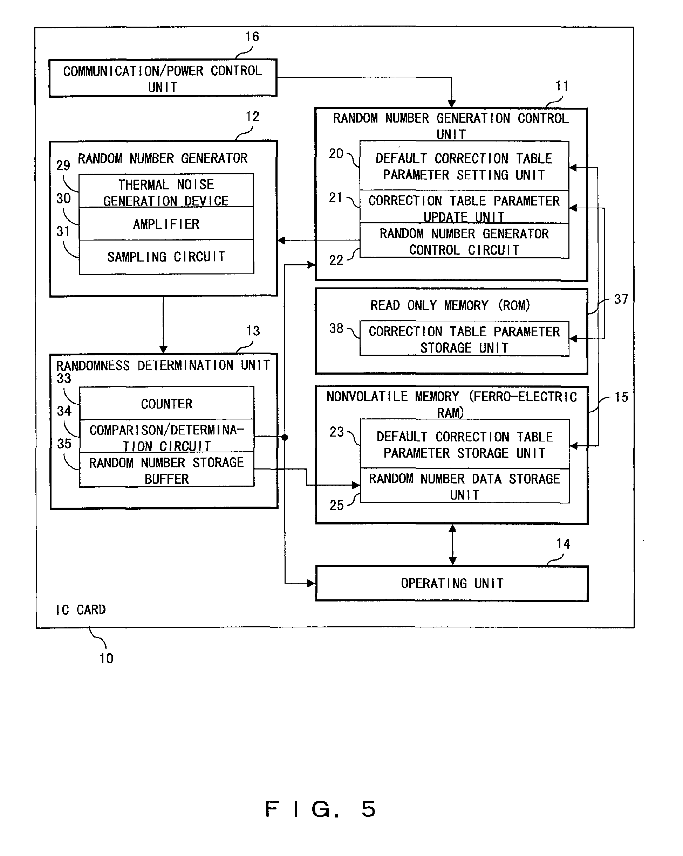

Fig. 5 shows the configuration of the third preferred embodiment of the IC card. In Fig. 5, the communication/power control unit 16 is the same as that of the basic circuit shown in Fig. 2, and either the noncontact communication unit 27 shown in Fig. 3 or the contact communication/power control unit 37 shown in Fig. 4 can be used for it. In this third preferred embodiment, the correction table parameter storage unit 24 provided in the nonvolatile memory 15 is realized as the correction table parameter storage unit 38 of read-only memory (ROM) 37, which is different from the first and second preferred embodiments. The ROM, whose degree of integration is larger than that of the nonvolatile memory 15, stores many correction table parameters, thereby reducing the usable capacity of the nonvolatile memory 15.

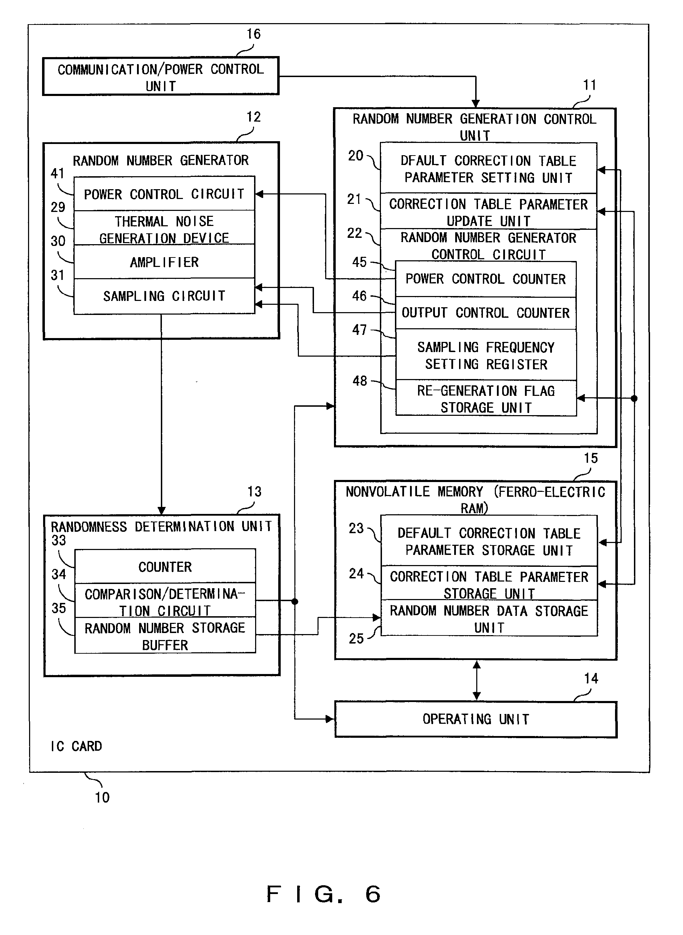

Fig. 6 shows the configuration of the fourth preferred embodiment of the IC card. The configuration in Fig. 6 differs from that of the first preferred embodiment in Fig. 3 in that the random number generator control circuit 22 in Fig. 6 comprises a power control counter 45 for controlling the power of the random number generator, an output control counter 46 for controlling the random number output of the random number generator, a sampling frequency setting register 47 for setting the sampling frequency of a sampling circuit 31 in the random number generator, and a re-generation flag storage unit 48 for storing a re-generation flag when re-generating a random number. The configuration in Fig. 6 also differs from that in Fig. 3 in that a power control circuit 41 is provided in the random number generator 12.

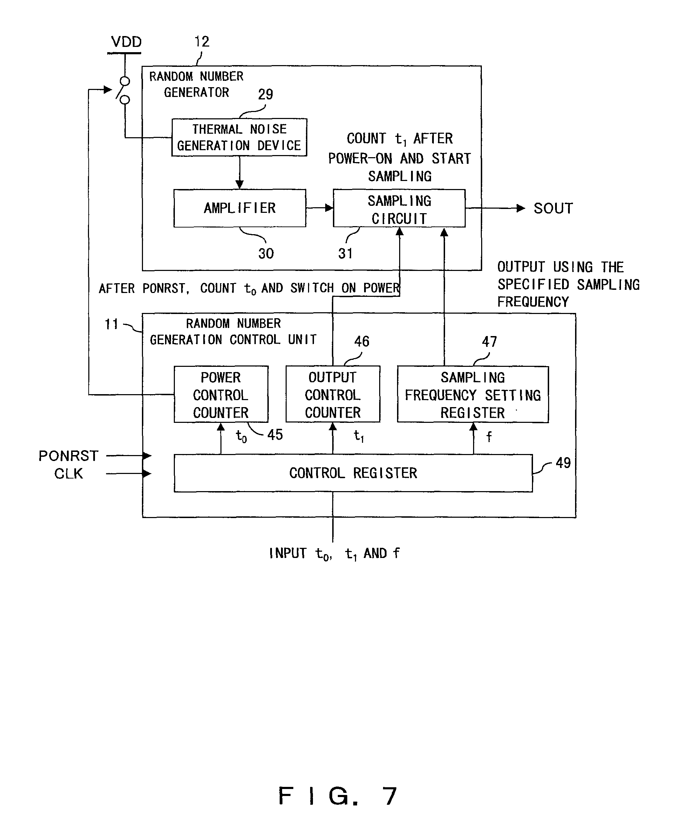

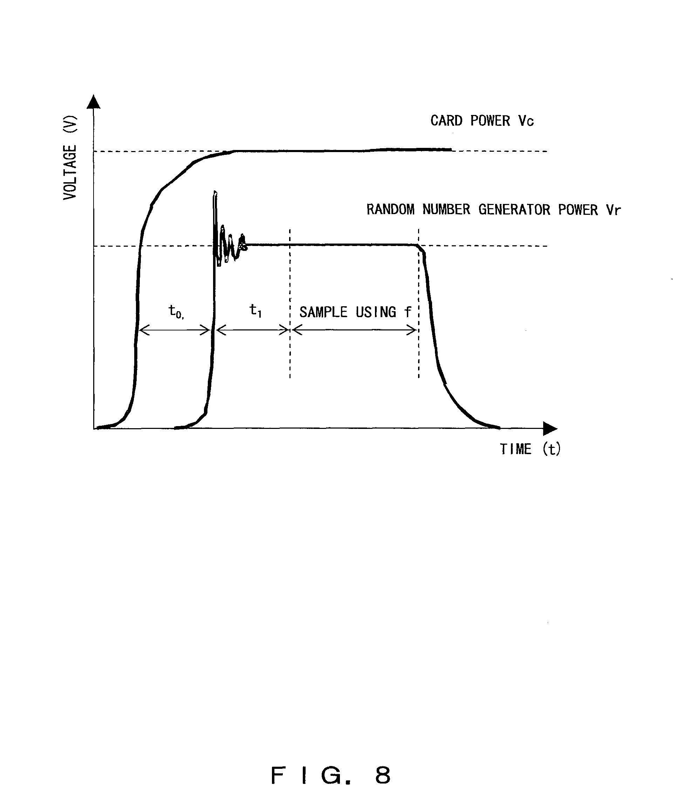

Fig. 7 shows the control method of the random number generator 12. Here, as an example, control is realized via the random number generation control unit 11 in the fourth preferred embodiment shown in Fig. 6. The control operation shown in Fig. 7 is described with reference to the correction table parameter shown in Figs. 8 through 10. When, for example, the communication/power control unit 16 shown in Fig. 6 gives a power-on reset (PONRST) signal and a clock (CLK) signal to the random number generation control unit 11, a 16-bit power control counter 45 begins counting time to as a correction table parameter input into a control register 49.

Fig. 8 explains this correction table parameter for generating a random number. In this case, it is assumed that at time to after the power Vc of the IC card is switched on in Fig. 8, at time t₁ after the power is switched on, and when the output of the random number generator is stabilized, then sampling for generating a random number is started and the power Vr of the random number generator 12 is switched off after the sampling. Under this assumption, a random number is generated using a sampling frequency f for generating a random number.

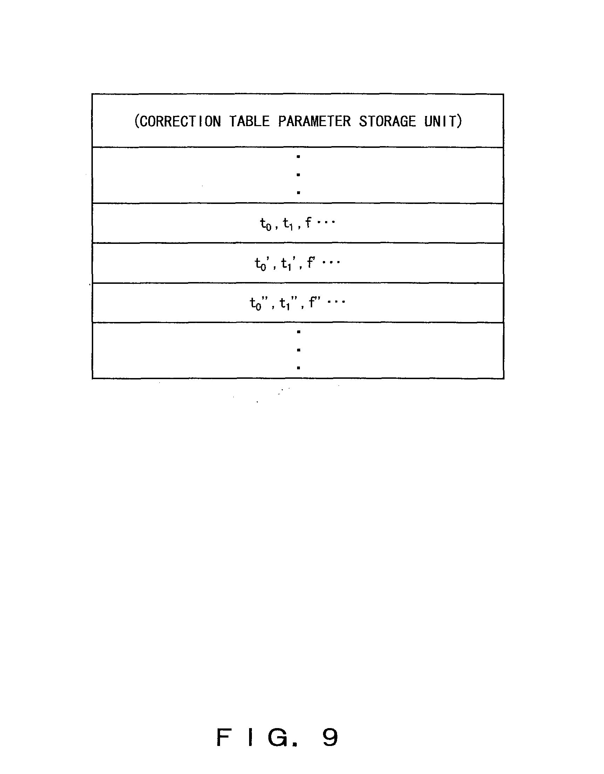

Fig. 9 shows the storage form of a correction table parameter stored in the correction table parameter storage unit 24 shown in Fig. 2. Generally, a plurality of sets of times t0 and t1 and the sampling frequency f are stored in relation to Fig. 8.

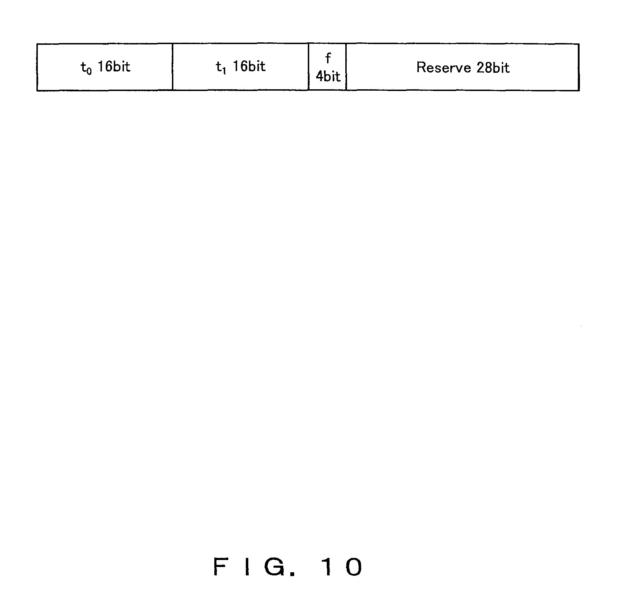

Fig. 10 shows the data format of the correction table parameter for one line shown in Fig. 9. If, as an example, it is assumed that each value of time t₀ and t₁ in Fig. 8 is set to 10ms and that the clock frequency is 3.57MHz, the count numbers corresponding to the time t₀ and t₁ becomes 35,700, and 16 bits are needed for each storage area of to and t₁. If several frequencies are preset as sampling frequencies (such as 50kHz, 100kHz, and 250kHz) and if, of them, one is selected and combined into a correction table parameter, then by preparing, for example, four bits as the storage area of the frequency f, 16 steps of sampling frequencies can be set. If the entire length of the storage area of the correction table parameter shown in Fig. 10 is 64 bits, 28 bits will be reserved.

If in Fig. 8 the times t₀ and t₁ are not sufficiently long and the sampling frequency f is high, then a generated random number will be easily biased toward 0 or 1. It is effective to evaluate in advance the characteristics of such a random number generator, specifically any characteristics for which the occurrence ratio of 0 or 1 (randomness determination information) increases in relation to each correction table parameter set stored in Fig. 9 and to store the determination result in relation to each correction table parameter. Thus, a correction table parameter for improving the randomness can be selected according to the randomness determination result of each generated random number. Specifically, if the generated random number is biased toward 0, a correction table parameter in which the occurrence ratio of 1 increases is selected for generating a new random number.

In Fig. 7, the correction table parameters, specifically the values of the times t0 and t1 and the frequency f, are given to the power control counter 45, the output control counter 46, and the sampling frequency setting register 47, respectively, via the control register 49.

For the random number generator 12, its power is switched on when the counter value reaches a value corresponding to to after the resetting of the power-on function and the output of the thermal noise generation device 29 is amplified by an amplifier 30 and is given to a sampling circuit 31. Then, when the counter 46 counts a number corresponding to the time t₁, the sampling circuit 31 begins the sampling of the output of the amplifier 30, performs the sampling using the frequency set by the sampling frequency setting register 47, and outputs an output SOUT to the randomness determination unit 13.

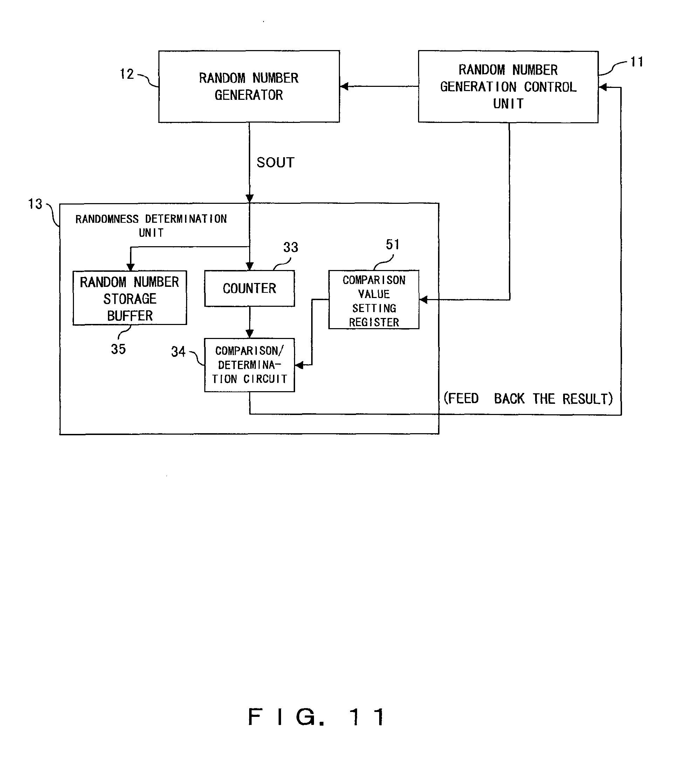

Fig. 11 shows the randomness determining operation of the randomness determination unit 13. The randomness determination unit 13 comprises a random number storage buffer 35 for storing random numbers output from the random number generator 12, a counter 33 for counting the generation frequency of 0 or 1 in the output of the random number generator 12, and a comparison/determination circuit 34 for comparing the output of the counter 33 with the contents of a register 51 in which a comparison value for determining the randomness to be given from the random number generation control unit 11 is set and determining the randomness. The determination result of the comparison/determination circuit 34 is fed back to the random number generation control unit 11 and it is notified of whether the random number outputted from the random number generator 12 can be used.

The randomness determination method of a random number generated by the random number generator 12 in Fig. 11 is described below. One of the specifications of this randomness determination is a specification by National Institute of Standards and Technology, Federal Information Processing Standards (FIPS) 140. In these standards, several tests such as a monobit test, a poker test, a runs test, a long runs test, and the like are specified as randomness determination tests.

In this preferred embodiment, the randomness of a generated random number is determined on the basis of the monobit test. In this monobit test, the number of "ls" in 20,000 bits of sample streams is counted and if the number X satisfies the following expression, the generated random number is determined to be usable.

### 9654 < X <10346

However, in the random number generator mounted on the IC card as in this preferred embodiment, since the length of a generated random number is at most approximately 1024 bits, these 1024 bits are related to the 20,000 bits of the monobit test. Then, if the occurrence frequency X of 0 or 1 in the 1024 bits satisfies the following expression, the generated random number is determined to be usable.

### 495 < X < 529

In this case, when the counter 33 counts the occurrence frequency of 0 or 1 in the random number generated by the random number generator 12, if the comparison/determination circuit determines that the counter value of the counter 33 is located between 495 and 529, which are set by a comparison value setting register 51, the generated random number can be determined to be usable.

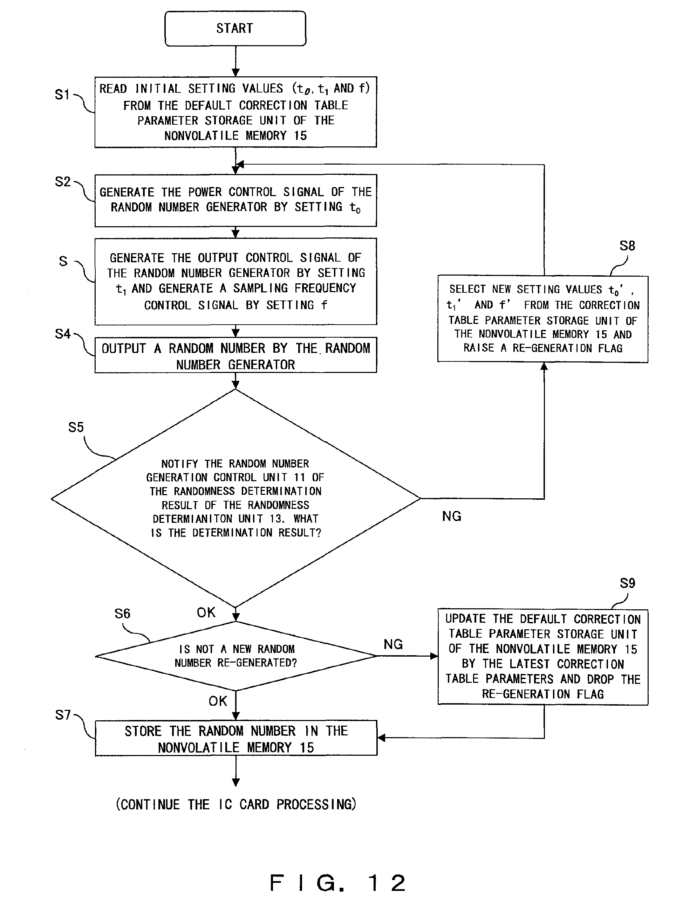

Fig. 12 is a flowchart of the entire above-described random number generation process in this preferred embodiment. When the process is started in Fig. 12, , in step S1, the values of the time t₀ and t₁ and the frequency f are read from the default correction table parameter storage unit 23 of the nonvolatile memory 15 as initial parameter setting values. Then, in step S2, the power control signal of the random number generator 12 is generated using the setting value to via the power control counter 45 shown in Fig. 7. Then, in step S3, the output control signal of the sampling circuit 31 is generated using the setting value t₁ via the output control counter 46 and a sampling frequency control signal is generated using the setting value f via the sampling frequency setting register 47, which are given to the sampling circuit 31.

As a result, in step S4, the random number generator 12 outputs a random number. Then, in step S5, the randomness determination unit 13 determines its randomness, and the determination result is reported to the random number generation control unit 11. If the randomness result is OK, in step S6 it is determined whether a new random number was generated; specifically, for example, if the randomness was inappropriate when generating the random number using the default parameter and a new random number was generated using another parameter. If a new random number was not generated, in step S7 the random number is stored in the random number data storage unit 25 of the nonvolatile memory 15 and then the processing of the IC card continues. If in step S5 the randomness result is NG, in step S8 new parameters, specifically the setting values t₀', t₁' and f', are selected from the correction table parameter storage unit 24 of the nonvolatile memory 15, the correction table parameter update unit 21 of the random number generation control unit 11 provides the new parameters to the random number generator control circuit 22, and a re-generation flag is raised in the re-generation flag storage unit 48. Then, the processes after step S2 and after are performed.

If in step S6 the determination of whether a new random number was not generated is NG, that is, a new random number was generated, in step S9 the latest correction table parameters, specifically the correction table parameters used to generate the currently output random number, are overwritten into the default correction table parameter storage unit 23 of the nonvolatile memory 15. Then, after the re-generation flag of the re-generation flag storage unit 48 is dropped, in step S7 the random number is stored.

Next, as the method of using random numbers in this preferred embodiment, many random numbers are stored in advance in the random number data storage unit 25 of the nonvolatile memory 15 shown in Fig. 2, and the same random number can be prevented from being used in a hardware-like manner by, for example, erasing the random number used for the operation.

Ferroelectric memory whose data can be stored and erased in units of bytes is used as the nonvolatile memory 15, many random numbers are generated in advance, and the stored portion of used random numbers are prevented from being accessed. In this case, by generating and storing a new random number after all pieces of the random number data are used, the possibility that a random number will be anticipated in the processing of the IC card can be reduced.

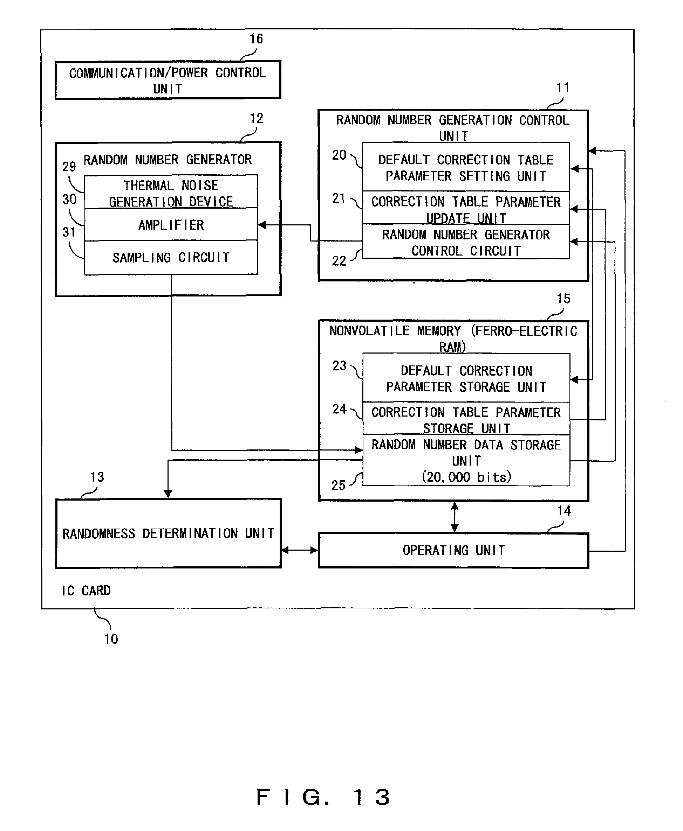

Lastly, the evaluation of the random number generator in this preferred embodiment is described with reference to Fig. 13. Since the random number generator mounted on the IC card as described earlier generates approximately 1,024 bits of random numbers and the randomness of 20,000 bits of random number samples is determined, for example, in the monobit test specified in the earlier-described FIPS 140. In the IC card shown in Fig. 13, 1,024 bits of random numbers are repeatedly generated and when the total of 20,000 bits of random numbers is generated, the random number generator is evaluated by determining its randomness using the 20,000 bits of random numbers as samples. Specifically, in Fig. 13, for example, the process is begun by issuing the evaluation starting command of the random number generator from the operating unit 14 to the random generation control unit 11. Then, after the random number generation control unit 11 sets a default correction table parameter in the random number generator control circuit 22, the random number generator 12 is activated and a generated random number is stored in the random number data storage unit 25. The random number generator 12 repeatedly generates a random number using the same parameter, and when 20,000 bits or more of random numbers are stored in the random number data storage unit 25, the randomness determination unit 13 is activated. Then, the randomness determination unit 13 determines the randomness by, for example, the monobit test, the poker test, the runs test or the long runs test, which are specified in the FIPS 140, and notifies the operating unit of the determination result. An evaluation of the random number generator such as this is that of the single macro and control/determination circuit of the random number generator. Essentially, the evaluation is performed by excluding factors by which the random number generator is externally affected such as power supply in a noncontact state and the like, and the operation of the random number generator 12 itself, while it is using a default correction table parameter, is evaluated.

Although in the above description the time to until the power of the random number generator is switched on after the power of the card is switched on, the stabilization time t₁ until the operation of the random number generator is stabilized after the power of the random number generator is switched on, and the sampling frequency f for generating a random number are all specified as examples of correction table parameters, as described with reference to Fig. 8, however, a random number can also be generated by, for example, using the power voltage as the parameter; specifically, the power voltage value Vr of the random number generator.

Although the randomness is determined on the basis of the monobit test of the FIPS 140, it can also be based on the poker test, the runs test or the long runs test. Furthermore, as described with reference to Fig. 12, if the randomness determination result of the random number generated after the parameter was updated is OK, the default correction table parameter stored in the nonvolatile memory is updated. This is because a parameter corresponding to the latest communication environment is used as the default correction table parameter when a subsequent random number generator is activated. However, in an environment where the communication condition frequently varies, the default correction table parameter cannot be updated.

### Industrial Applicability

The present invention can be used in all industries using an IC card that mounts a random number generator. The present invention can be used not only in all industries using an IC card but also in a random number generator in an environment easily affected externally.

## Claims

1. A random number generation device, comprising:
a random number generation unit for generating random numbers;
a random number generation control unit for providing parameters for enabling the random generation unit to generate random numbers; and
a randomness determination unit for determining the randomness of each generated random number,
wherein
if the randomness of a generated random number does not meet a predetermined condition, the random number generation control unit updates the parameters for generating a random number to enable the random number generation unit to generate a new random number.

2. The random number generation device according to claim 1, further comprising
a parameter storage unit for storing default parameters as the parameters to be used to generate random numbers when activating the random number generation device,
wherein
when activating the random number generation device, the random number generation control unit provides the default parameters to the random number generation unit.

3. The random number generation device according to claim 2, wherein
if the randomness of the random number generated using the default parameter does not meet the predetermined condition, the parameter storage unit further stores update parameters to be used for the random number generation control unit to update the parameters.

4. The random number generation device according to claim 3, wherein
the parameter storage unit stores a plurality of update parameters in relation to a randomness information indicating whether the random number may be biased toward 0 or 1,
the randomness determination unit provides determination information to the random number generation control unit indicating whether the generated random number may be biased toward 0 or 1, and
the random number generation control unit selects update parameters stored in the parameter storage unit in relation to the given determination information and the randomness information.

5. The random number generation device according to claim 2, wherein
if the randomness of a random number re-generated by the random number generation unit meets the predetermined condition, the random number generation control unit overwrites the default parameters stored in the parameter storage unit into parameters used to re-generate the new random number.

6. The random number generation device according to claim 2, wherein
the parameter storage unit is made of nonvolatile memory.

7. The random number generation device according to claim 1, further comprising
a re-generation flag storage unit for storing a flag indicating the re-generation when re-generating a new random number.

8. The random number generation device according to claim 1, wherein
the parameters for generating a random number include the elapse times after a power voltage is applied to the random number generation unit and a sampling frequency for generating a random number.

9. The random number generation device according to claim 1, which is mounted on an IC card that has power supplied externally in a noncontact manner.

10. A random number generation method, comprising:
reading parameters for generating random numbers from memory;
generating random numbers using the parameters;
determining whether the randomness of each generated random number meets the predetermined condition,
reading update parameters as the parameters for generating the random numbers if the randomness does not meet the predetermined condition; and
re-generating random numbers using the update parameters and repeating the process of the randomness determination and its subsequence processes with the re-generated random number.

11. A program which is used by a computer for generating random numbers and for enabling the computer to execute the process, the process comprising:
reading parameters for generating random numbers from memory;
generating random numbers using the parameters;
determining whether the randomness of each generated random number meets the predetermined condition,
reading update parameters as the parameters for generating the random numbers if the randomness does not meet the predetermined condition; and
re-generating random numbers using the update parameters and repeating the process of the randomness determination and its subsequence processes with the re-generated random number.

12. An evaluation method of a random number generator for generating a random number string with a bit number of 20,000 or less, comprising;
repeating the generation of a random number string by the random number generator and the storage in memory of the generated random number string;
determining the randomness of the 20,000 bits or more of samples when the total bit number of the random number string stored in the memory exceeds 20,000; and
evaluating the random number generator according to the determination result of the randomness.

13. A method of using a random number in units of byte length, comprising;
storing generated random numbers in nonvolatile memory in which data can be read/written in units of bytes; and
reading unused random numbers in units of byte length from the nonvolatile memory and the using of them when random numbers are needed in operation.

14. The method of using random numbers according to claim 13, wherein
the nonvolatile memory is comprised of ferroelectric memory.
